# EUROPÄISCHE PATENTSCHRIFT

(11) **EP 2 344 894 B1**
(45) Veröffentlichungstag und Bekanntmachung des Hinweises auf die Patenterteilung: **15.05.2013**
(21) Anmeldenummer: 10702020.8
(22) Anmeldetag: 11.01.2010
(51) Int. Cl.: G01P 5/00

(54) **VERFAHREN ZUR BESTIMMUNG VON STRÖMUNGSVERHÄLTNISSEN**
METHOD FOR DETERMINING FLOW CONDITIONS
PROCÉDÉ DE DÉTERMINATION DES RAPPORTS DE FLUX

(30) Priorität: 19.02.2009 DE 102009009551
(43) Veröffentlichungstag der Anmeldung: 20.07.2011
(73) Patentinhaber: LaVision GmbH, 37081 Göttingen (DE)
(72) Erfinder: WIENEKE, Bernhard, 37085 Göttingen (DE)
(74) Vertreter: Schneider, Peter Christian
(86) Internationale Anmeldenummer: PCT/EP2010/000082
(87) Internationale Veröffentlichungsnummer: WO 2010/094370

(56) Entgegenhaltungen:
- US-B1- 6 603 535
- KAZUO OHMI ET AL: "Particle-tracking velocimetry with new algorithms; Particle-tracking velocimetry" MEASUREMENT SCIENCE AND TECHNOLOGY, IOP, BRISTOL, GB, Bd. 11, Nr. 6, 1. Juni 2000 (2000-06-01), Seiten 603-616, XP020062944 ISSN: 0957-0233
- RUHNAU P ET AL: "A variational approach for particle tracking velocimetry; A variational approach for particle tracking velocimetry" MEASUREMENT SCIENCE AND TECHNOLOGY, IOP, BRISTOL, GB, Bd. 16, Nr. 7, 1. Juli 2005 (2005-07-01), Seiten 1449-1458, XP020090638 ISSN: 0957-0233

## Beschreibung

### Gebiet der Erfindung

Die Erfindung bezieht sich auf ein Verfahren zur Bestimmung von Strömungsverhältnissen in einem Messvolumen, das von einem mit optisch detektierbaren Partikeln beimpften Fluid durchströmt ist, umfassend die folgenden Schritte:
a) Simultanes Aufnehmen, zu einem ersten Aufnahmezeitpunkt, einer ersten Mehrzahl zweidimensionaler, realer Bilder einer dreidimensionalen, realen Verteilung der Partikel mittels derselben Mehrzahl von räumlich versetzt zueinander angeordneten Bilddetektoren,
b) Wiederholen von Schritt a zu mindestens einem zweiten Aufnahmezeitpunkt,
c) Für jeden Aufnahmezeitpunkt: Ermitteln einer dreidimensionalen, geschätzten Verteilung der Partikel anhand der realen Bilder und
d) Berechnen eines dreidimensionalen Verschiebungsvektorfeldes durch Vergleich der geschätzten Verteilungen.

### Stand der Technik

Derartige Verfahren sind als 3D-PTV, dreidimensionale Particle Tracking Velocimetry, bekannt. Details hierzu sind z.B. aus Th. Dracos (ed.), Three Dimensional velocity and Vorticity Measuring and Image Analysis Techniques, 209-227 (1996) Kluver Academic Publishers oder aus Kazuo Ohmi et al: "Particle-tracking velocimetry with algorithms; Particle-tracking velocimetry", MEASUREMENT SCIENCE AND TECHNOLOGY, IOP, BRISTOL, GB, d. 11, NR. 6, 1. Juni 2000, Seiten 603-616 bekannt. Die 3D-PTV beruht auf dem Grundgedanken, die individuellen Positionen einer Mehrzahl von Partikeln in einem Messvolumen zu unterschiedlichen Zeitpunkten mittels Triangulation individuell zu bestimmen. Durch Vergleich der auf diese zu unterschiedlichen Zeitpunkten ermittelten Verteilungen lässt sich für jedes individualisierte Partikel ein Verschiebungsvektor bestimmen, der die Bewegung des Partikels zwischen beiden Messzeitpunkten repräsentiert. Speziell wird ein Messvolumen von mehreren, typischer Weise von drei oder vier Kameras simultan unter unterschiedlichen Beobachtungswinkeln aufgenommen. In jedem der aufgenommenen, 2-dimensionalen Bilder wird die für jedes abgebildete Partikel die 2-dimensionale Partikelposition bestimmt. Anschließend wird aus der Zusammenschau der unterschiedlichen Bilder in Kenntnis der jeweiligen Beobachtungswinkel für jedes abgebildete Partikel die 3-dimensionale Partikelposition im Messvolumen bestimmt. Dieser Schritt wird allgemein als Triangulation bezeichnet. Dieses Verfahren wird zu wenigstens zwei aufeinander folgenden Zeitpunkten durchgeführt, sodass wenigstens einige der Partikel im Messvolumen zwischen den Aufnahmezeitpunkten ihre Position aufgrund der Strömung im Messvolumen geringfügig aber deutlich messbar verändern. In einem oft als Tracking bezeichneten Schritt werden die korrespondierenden, zu den unterschiedlichen Zeitpunkten ermittelten Partikelpositionen einander zugeordnet. Ein Vergleich der einander zugeordneten Partikelpositionen führt zur Berechnung eines Verschiebungsvektorfeldes, das für jedes Partikel im Messvolumen oder für jedes Volumenelement definierter Größe einen Vektor enthält, der die jeweilige, strömungsbedingte Verschiebung zwischen den Beobachtungszeitpunkten repräsentiert. Ein Nachteil dieses Verfahrens liegt in seiner Beschränkung auf vergleichsweise kleine Teilchenzahlen und - dichten im Messvolumen. Eine zu große Teilchendichte führt bei der Abbildung des dreidimensionalen Messvolumens zu vielfachen Überlappungen der Abbildungen der Partikel in den aufgenommenen Kamerabildern, sodass die Bestimmung der 2-dimensionalen Partikelpositionen ungenau und fehlerhaft wird. Dadurch ergeben sich bei der Triangulation große Fehler bei der Bestimmung der 3-dimensionalen Partikelpositionen. Z.B. werden vorhandene Partikel nicht gefunden bzw. es werden nicht vorhandene Partikel "gefunden", sog. "ghost particles".

Teilweise Abhilfe kann durch den Einsatz einer größeren Anzahl von Detektoren in unterschiedlichen räumlichen Positionen, die das Messvolumen unter verschiedenen Beobachtungswinkeln betrachten. geschaffen werden. Aus Raum- und Kostengründen kann dieser Ansatz jedoch nur beschränkt verfolgt werden. Zudem erhöhen sich mit wachsender Anzahl der Detektoren, d.h. mit wachsender Anzahl der bei der Triangulation zu berücksichtigenden Bilder, der Rechenaufwand und damit die Messzeit erheblich. Gerade die aus ihrer mathematischen Einfachheit resultierende Schnelle ist jedoch eine der besonders vorteilhaften Eigenschaften der 3D-PTV, auf den man gemeinhin nicht verzichten will.

Sofern der Zeitaspekt keine Rolle spielt, kann auf andere bekannte Verfahren zurückgegriffen werden, insbesondere auf PIV, Particle Imaging Velocimmetry, mit tomografischer Rekonstruktion, kurz Tomo-PIV genannt. Bei diesem Verfahren, das aus der EP 1 517 150 B1 bekannt ist, werden ebenfalls zweidimensionale Bilder eines dreidimensionalen Messvolumens unter unterschiedlichen Aufnahmewinkeln und paarweise zu unterschiedlichen Zeitpunkten aufgenommen. Im Vergleich zur PTV kann das Messvolumen bei der Tomo-PIV mit einer wesentlich höheren Partikeldichte beimpft werden. Es erfolgt jedoch keine individualisierte Betrachtung einzelner Partikel, deren Position durch Triangulation bestimmt würde. Vielmehr werden tomografische Rekonstruktionsverfahren eingesetzt, die das Messvolumen in eine Vielzahl festgelegter voxel unterteilen und bloße Intensitätsverteilungen berechnen. Ein dreidimensionales Verschiebungsvektorfeld wird dann durch Kreuzkorrelationstechniken ermittelt, die auf die Voxel-basierten, dreidimensionalen Intensitätsverteilungen angewendet werden. Der Vorteil der Tomo-PIV liegt in der erzielbaren hohen Dichte der Verschiebungsvektoren im resultierenden, dreidimensionalen Verschiebungsvektorfeld. Das Verfahren ist jedoch sehr rechenintensiv und daher zeitaufwendig.

### Aufgabenstellung

Es ist die Aufgabe der vorliegenden Erfindung, ein gattungsgemäßes Verfahren derart weiterzubilden, dass ausgehend von bekannten 3D-PTV-Techniken eine größere Partikeldichte im Messvolumen bearbeitet und somit eine größere Dichte von Verschiebungsvektoren im resultierenden, dreidimensionalen Verschiebungsvektorfeld erzielt werden kann.

### Darlegung der Erfindung

Diese Aufgabe wird in Verbindung mit den Merkmalen des Oberbegriffs von Anspruch 1 gelöst durch den vor Schritt c durchzuführenden Schritt
e) für jeden Bilddetektor: Bestimmen einer optischen Transferfunktion, mit der die reale Verteilung durch den Bilddetektor abgebildet wird,
   sowie weiter dadurch,
   dass Schritt c mit einer grob geschätzten Anfangsverteilung als geschätzter Verteilung startet und danach iterativ durchgeführt wird mit den folgenden Teilschritten:
c1) Berechnen zweidimensionaler, virtueller Bilder der geschätzten Verteilung auf Basis der in Schritt e bestimmten Transferfunktionen,
c2) vergleichsweises Ermitteln von Unterschieden zwischen den virtuellen Bildern und den jeweils zugeordneten realen Bildern,
c3) Verändern der geschätzten Verteilung in Abhängigkeit von den ermittelten Unterschieden,
wobei die Iteration bei Erreichen eines vorgegebenen Abbruchkriteriums beendet wird.

Grundidee der vorliegenden Erfindung ist es, die das bekannte Verfahren beschränkende, eindeutige Triangulationsberechnung der Partikelverteilung im Messvolumen durch ein iteratives Rekonstruktionsverfahren zu ersetzen. Es wird somit gar nicht erst der Versuch unternommen, wie bei der 3D-PTV die dreidimensionale Partikelverteilung aus einer Vielzahl uneindeutiger, zweidimensionaler Partikelpositionen exakt zu berechnen. Vielmehr wird zunächst eine grobe Abschätzung der Partikelverteilung im Messvolumen vorgenommen. Eine einfache Möglichkeit hierfür ist, das Ergebnis einer groben Triangulation, wie sie weiter oben im Zusammenhang mit einem 3D-PTV-Verfahren gemäß dem Stand der Technik beschrieben wurde, als Startverteilung zu wählen. Die Anzahlschätzung kann auf Basis der bekannten Parameter des Beimpfungsprozesses vorgenommen werden. Auch andere Methoden zur Gewinnung der hier als Startverteilung bezeichneten groben Abschätzung sind denkbar. Die spezielle Weise der Gewinnung der Startverteilung ist für die vorliegende Erfindung nicht von wesentlicher Bedeutung.

Ausgehend von der Startverteilung werden nun zweidimensionale virtuelle Bilder berechnet, d.h. diejenigen Bilder, die durch die Detektoren aufgenommen würden, sofern die Startverteilung der tatsächlichen Partikelverteilung im Messvolumen entsprechen würde, was in der Regel nicht der Fall sein wird. Entsprechend ergeben sich Unterschiede der virtuellen Bildern zu den realen Bildern, d.h. zu denjenigen Bildern, die von den Detektoren tatsächlich aufgenommen wurden. Unterschiede zwischen den virtuellen Bildern und den realen Bildern weisen auf Fehler der geschätzten Startverteilung hin, sodass die Parameter der geschätzten Startverteilung, wie beispielsweise Anzahl, Position, Größe, Helligkeit etc. eines oder mehrerer Partikel verändert werden können, um die Verteilungsschätzung zu verbessern, d.h. die geschätzte Verteilung der tatsächlichen Verteilung anzunähern. Die derart veränderte geschätzte Verteilung wird dem nächsten Iterationsschritt zugrunde gelegt. Das bedeutet, dass erneut virtuelle Bilder berechnet werden, d.h. diejenigen zweidimensionalen Bilder, die von den Detektoren aufgenommen würden, wenn die veränderte geschätzte Verteilung der tatsächlichen Verteilung entspräche. Anschließend erfolgt ein weiterer vergleich der neuen virtuellen Bilder mit den realen Bildern, wobei die Abweichungen von Iterationsschritt zu Iterationsschritt abnehmen. Die Iteration wird solange durchgeführt, bis ein vorgegebnes Abbruchkriterium erreicht wird. Dies kann z.B. dann sein, wenn die Abweichungen unterhalb vorgegebener Toleranzgrenzen zu liegen kommen. Dies bedeutet dann, dass die geschätzte Verteilung innerhalb vorgegebener Toleranzen der tatsächlichen Verteilung entspricht. Auf diese Weise kann die tatsächliche Verteilung ohne Triangulationsberechnung im Rahmen einer gewünschten Gehauigkeit bestimmt werden. Alternativ oder zusätzlich kann eine vorgegebene Anzahl an Iterationsschritten als Abbruchkriterium dienen. Mit den so ermittelten Partikelverteilungen zu sämtlichen Messzeitpunkten kann dann in das bekannte 3D-PTV-Verfahren zurückgekehrt und durch Tracken oder andere Verfahren das dreidimensionale Verschiebungsvektorfeld berechnet werden.

Um sicherzustellen, dass die vorgenommenen Änderungen zu der gewünschten Verbesserung der Schätzung der Partikelverteilung führen, kann bei einer Weiterbildung des erfindungsgemäßen Verfahrens vorgesehen sein, dass in Schritt c2, d.h. beim Vergleichen der virtuellen mit den realen Bildern zusätzlich Unterschiede zwischen virtuellen Bildern unterschiedlicher Iterationsstufen bestimmt werden. Der dahinterstehende Gedanke soll am Beispiel der Positionskorrektur eines konkreten Partikels erläutert werden. Ist beispielsweise die schrittweise Verringerung einer gegebenen Abweichung mit einer linearen Positionsverschiebung eines konkreten Partikels korreliert und wird festgestellt, dass die zuletzt vorgenommene Verschiebung des Partikels entgegen dem bisherigen Trend zu einer Vergrößerung der betrachteten Abweichung führt, kann dies als Hinweis darauf interpretiert werden, dass die Positionskorrektur durch lineare Verschiebung des Partikels ihr Maximum überschritten hat und daher andere dieses Partikel betreffende Korrekturen angezeigt sind, wie beispielsweise eine Veränderung seiner Größe, die Richtung seiner Positionskorrektur oder Ähnliches. Mit anderen Worten wird zur Verbesserung der Konvergenz der Iteration vorgeschlagen, nicht nur die Abweichungen zwischen aktuellen virtuellen Bildern und zugeordneten realen Bildern, sondern auch Trends zu berücksichtigen, die nur bei Betrachtung einer oder mehrerer zurückliegender Iterationsstufen erkennbar sind.

Bei einer günstigen Weiterbildung der Erfindung ist vorgesehen, dass der Schritt des Wiederholens der Aufnahme des Messvolumens zu mehr als einem zweiten Aufnahmezeitpunkt durchgeführt wird, wobei in dem Schritt des Veränderns der geschätzten Verteilung jede Veränderung der geschätzten Verteilung einer Plausibilitätsüberprüfung unter der Annahme unterworfen wird, dass kein nicht-randständiges Partikel aus dem Messvolumen verschwinden kann. So kann es beispielsweise sein, dass auf Basis der erfindungsgemäßen Behandlung von Bildern, die zu einem ersten und einem zweiten Zeitpunkt aufgenommen wurden, als Veränderung der geschätzten Verteilung die Entfernung oder Hinzufügung eines Partikels vorgesehen wird, wohingegen auf Basis der erfindungsgemäßen Behandlung von Bildern, die zu dem ersten und einem dritten Zeitpunkt aufgenommen wurden, keine derartige Maßnahme vorgesehen wird. Dies deutet dann darauf hin, dass die Maßnahme nicht erforderlich ist, sondern eine Abschattung eines Partikels durch andere Partikel zum zweiten Aufnahmezeitpunkt vorlag. Aufgrund einer solchen Plausibilitätsprüfung kann dann die vorgesehene Maßnahme unterlassen oder modifiziert werden. Eine solche Plausibilitätsprüfung ist jedoch nur in hinreichender Entfernung vom Rand des Messvolumens sinnvoll, da es im Randbereich tatsächlich zu einem Ein- oder Ausdiffundieren von Partikeln kommen kann.

Eine wichtige Aufgabe kommt der Bestimmung der optischen Transferfunktion zu. Die optische Transferfunktion beschreibt jeweils die Abbildung der realen Partikelverteilung im Messvolumen auf die zweidimensionale Detektorfläche eines konkreten Detektors. Für jeden Detektor ergibt sich somit eine eigene Transferfunktion.

Die optische Transferfunktion umfasst vor allem zwei Aspekte. Ein erster, oft als "Mapping" bezeichneter Aspekt bezieht sich auf die geometrische Zuordnung einer 3-dimensionalen Position im Messvolumen auf eine 2-dimensionale Position im einem aufgenommenen Bild. Ein zweiter Aspekt bezieht sich auf die Abbildung eines infinitesimalen Lichtpunktes als "Beugungsscheibchen". Dieser zweite Aspekt wird häufig als optische Modulationstransferfunktion (MTF) bezeichnet und bezieht z.B. auch Verzerrungen durch sphärische oder spektrale Abberationen oder Astigmatismus mit ein. Beide Aspekte gemeinsam werden hier als optische Transferfunktion bezeichnet, wobei bei konkreten Ausgestaltungen der Erfindung die Wichtung der einzelnen Aspekte innerhalb der resultierenden optischen Transferfunktion unterschiedlich ausfallen kann.

Die optische Transferfunktion muss bekannt sein, um aus einer angenommenen Partikelverteilung im Messvolumen die für die vorliegende Erfindung wesentlichen, virtuellen Bilder zu berechnen. Die Genauigkeit, mit der die optischen Transferfunktionen bekannt sind, bestimmt die Genauigkeit des erfindungsgemäßen Verfahrens. Auf einfache Weise lässt sich die optischen Transferfunktionen durch Kalibrierung, insbesondere durch Aufnahme realer Bilder eines oder mehrerer bekannter Objekte im Messvolumen und Vergleich des oder der bekannten Objekte mit den aufgenommenen Bildern bestimmen. Hierzu kann beispielsweise eine Kalibrierplatte mit Markierungen bekannter Größe und Anordnung in unterschiedlichen Positionen im Messvolumen positioniert und jeweils aufgenommen werden. Aus den resultierenden Bildern lässt sich genau bestimmen, wie unterschiedliche Gebiete des Messvolumens abgebildet werden. Alternativ zur Kalibrierplatte kann auch ein Kalibriergitter, d.h. eine dreidimensionale Verteilung von Markierungen bekannter Größe und Anordnung verwendet werden. Sind die Markierungen auf Kalibrierplatte oder Kalibriergitter hinreichend klein, können "Mapping" und MTF-Bestimmung gleichzeitig durchgeführt werden. Bei größeren Markierungen werden "Mapping und MTF-Bestimmung typischerweise in getrennten Kalibrierschritten durchgeführt.

Zusätzlich zu derartigen Kalibrierobjekten können reale Partikel bekannter Größe und bekannter Helligkeit zur Korrektur der Transferfunktionen eingesetzt werden. Ein entsprechendes Korrekturverfahren ist aus der DE 10 2006 055 746 A1 bekannt. Bei dieser Variante werden "Mapping" und MTF-Bestimmung typischerweise gleichzeitig durchgeführt.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1:: eine schematische Darstellung des 3D-PTV-Verfahren,
- Figur 2:: eine schematische Darstellung eines erfindungsgemäßen Einzelschritts des Verfahrens von Figur 1.

### Beschreibung bevorzugter Ausführungsformen

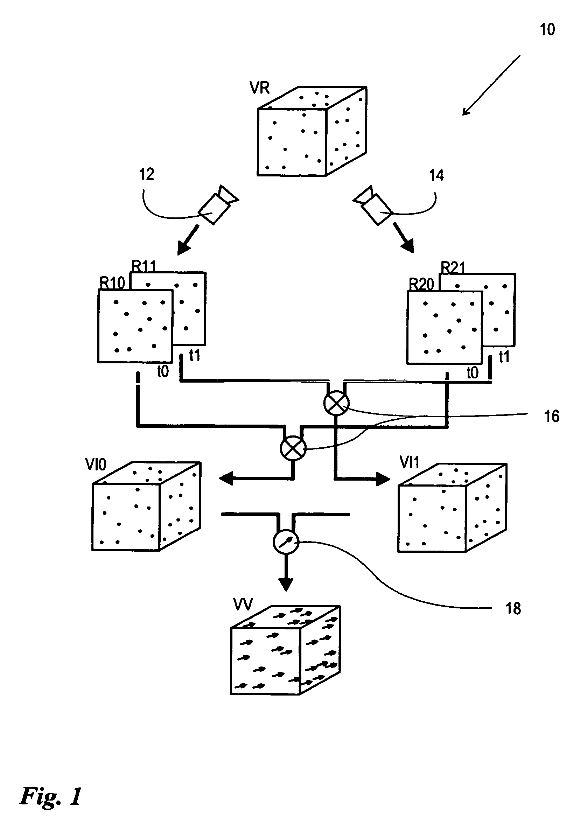

Figur 1 zeigt eine schematische Darstellung des 3D-PTV-Verfahrens wie es in der dargestellten Allgemeinheit dem Fachmann bekannt ist. Ausgegangen wird von einem realen Volumen VR, das ein Messvolumen repräsentiert, welches von einem Fluid durchströmt ist, das mit optisch detektierbaren Partikeln beimpft ist. Vorzugsweise werden fluoreszierende oder reflektierende Partikel verwendet, die bevorzugt gleich oder wenigstens ähnlich ausgestaltet sind und deren Dichte insbesondere an die Fluiddichte angepasst ist. Beispielsweise können hohle oder gefüllte Glas- oder Kunststoffkügelchen oder - insbesondere in Gasströmungen - Flüssigkeitströpfchen verwendet werden. Es ist jedoch grundsätzlich auch möglich, unregelmäßige Partikel wie beispielsweise Rußpartikel zu verwenden.

Das Messvolumen VR wird von einer Mehrzahl von Bilddetektoren 12, 14 zur Erzeugung realer Bilder aufgenommen. Bei der dargestellten Ausführungsform sind zwei Detektoren 12, 14 gezeigt. Es ist jedoch ebenso möglich, mehr als zwei Detektoren zu verwenden. Erforderlich ist, dass wenigstens zwei der Detektoren das Messvolumen unter unterschiedlichen Beobachtungswinkeln aufnehmen. Ohne Beschränkung der Allgemeinheit erfolgt die nachfolgende Beschreibung anhand der Ausführungsform mit zwei Detektoren 12, 14, wobei es für den Fachmann ein leichtes ist, die Lehre der hiesigen Offenbarung auf Ausführungsformen mit mehr als zwei Detektoren zu übertragen.

Jeder Detektor 12, 14 nimmt zu zwei unterschiedlichen Zeitpunkten t0 und t1 jeweils ein zweidimensionales, reales Bild des realen Messvolumens VR auf. Hieraus ergeben sich wenigstens vier reale Bilder R10, R11, R20 und R21. Die Indizierung soll andeuten, dass das reale Bild R10 von dem ersten Detektor 12 zum Zeitpunkt t0, das reale Bild R11 vom ersten Detektor 12 zum Zeitpunkt t1, das reale Bild T20 vom zweiten Detektor 14 zum Zeitpunkt t0 und das reale Bild R21 vom zweiten Detektor 14 zum Zeitpunkt t1 aufgenommen wurden. Für jeden Zeitpunkt tj, wo j = 0 oder 1 erfolgt im Anschluss eine Verknüpfung 16 der jeweils zugeordneten Bildpaare R10, R20 bzw. R11, R21. Diese Verknüpfungen 16 führen zu zwei virtuellen Rekonstruktionen des Messvolumens VR, die hier als virtuelle oder imaginäre Volumina VIj angesprochen werden, wobei das virtuelle Volumen VI0 das Messvolumen VR zum Zeitpunkt t0 und das virtuelle Volumen VI1 das Messvolumen VR zum Zeitpunkt t1 repräsentieren.

Durch die nachfolgende Verknüpfung 18, die dem Fachmann grundsätzlich bekannt ist, wird ein dreidimensionales Verschiebungsvektorfeld VV erzeugt. Das Verschiebungsvektorfeld VV entsteht durch individuellen Vergleich der Positionen der Partikelabbildungen in den virtuellen Volumina VIj. Es repräsentiert somit die Positionsänderungen jedes einzelnen Partikels im Messvolumen VR zwischen dem Zeitpunkt t0 und dem Zeitpunkt t1.

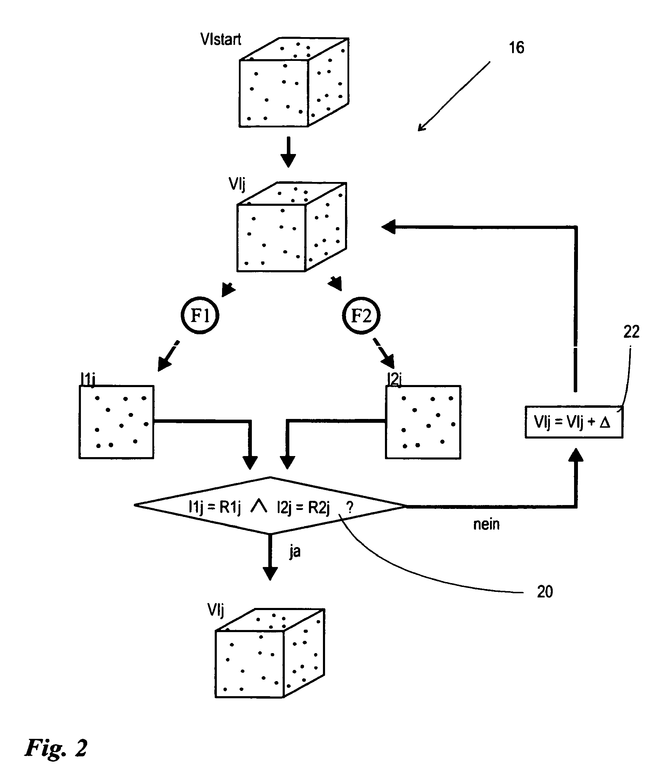

Die erfindungsgemäße Abwandlung dieses im Grunde bekannten Verfahrens, liegt in der speziellen Ausführungsform der Verknüpfung 16, mit der aus den realen Bildern R1j, R2j die virtuellen Volumina VIj berechnet werden. Die Verknüpfung 16 ist schematisch in Figur 2 dargestellt.

Ausgegangen wird von einer grob gemutmaßten Partikelverteilung im Messvolumen VR. Mit anderen Worten wird ein virtuelles Volumen VIstart vorgegeben. Die Vorgabe kann beispielsweise eine theoretisch berechnete Verteilung einer Anzahl geschätzter Partikel sein, wobei die zahlenmäßige Abschätzung aus einer vom Versuchsaufbau her bekannten Partikeldichte resultieren kann. Es können jedoch auch andere Abschätzungsmechanismen verwendet werden, die sich beispielsweise auf die aufgenommenen realen Bilder R10, R11, R20, R21 stützen. Insbesondere lässt sich auch das Ergebnis einer vorab (schnell und entsprechend wenig genau) durchgeführten 3D-PTV-Messung als Startverteilung verwenden. Die konkrete Herkunft der Vorgabe des virtuellen Startvolumens VIstart ist für die vorliegende Erfindung nicht von Bedeutung. Ausgehend von der Startvorgabe wird erfindungsgemäß ein Iterationsprozess gestartet. Zunächst wird VIstart als aktuelles virtuelles Volumen VIj, wobei j den repräsentierten Zeitpunkt tj anzeigt, gesetzt. Aus dem aktuellen virtuellen Volumen VIj werden virtuelle Bilder I1j und I2j berechnet, die realen, von den Detektoren 12, 14 zum Zeitpunkt tj aufgenommenen Bildern entsprechen würden, wenn die Partikelverteilung, wie durch das virtuelle Volumen VIj repräsentiert, der tatsächlichen Verteilung im realen Volumen VR entsprechen würde. Dieser Berechnung der virtuellen Bilder I1j, I2j liegen optische Transferfunktionen F1, F2 zugrunde, die jeweils die Abbildung des Volumens VR auf die Detektorflächen des ersten Detektors 12 bzw. des zweiten Detektors 14 repräsentieren.

Im nächsten Schritt 20 werden die virtuellen Bilder I1j, I2j mit den realen Bildern R1j bzw. R2j verglichen. Wie die Indizierung verdeutlicht, hat jeweils nur ein Vergleich der von einem gegebenen Detektor aufgenommen realen Bilder mit virtuellen Bildern zu erfolgen, denen die optische Transferfunktion dieses speziellen Detektors zugrunde lag, wobei das Verfahren für jeden Zeitpunkt t0, t1 separat durchgeführt wird. Der Vergleich kann zu dem Ergebnis führen, dass jedes der virtuellen Bilder I1j, I2j mit dem jeweils zugeordneten, realen Bild R1j bzw. R2j übereinstimmt oder das wenigstens eines der virtuellen Bilder Ilj, I2j nicht mit dem zugeordneten realen Bild R1j bzw. R2j übereinstimmt. Das Gleichheitszeichen ("=") in der Formeldarstellung von Schritt 20 in Figur 2 ist nicht als Gleichheit im strengen Sinn zu verstehen. Vielmehr ist das Vergleichsergebnis "ja", wenn reale und virtuelle Bilder bis auf vorgegebene Toleranzen miteinander übereinstimmen. Umgekehrt ist das Vergleichsergebnis "nein", wenn ein die vorgegebenen Toleranzen überschreitender Unterschied zwischen den virtuellen und realen Bildern vorliegt.

Herrscht Übereinstimmung, wird das aktuelle virtuelle Volumen VIj als Verknüpfungsergebnis der Verknüpfung 16 ausgegeben und dient als Grundlage für die Berechnung 18 des Verschiebungsvektorfeldes VV.

Anderenfalls werden Änderungen am aktuellen virtuellen Volumen VI vorgenommen. Diese Änderungen, die in Figur 2 durch die Gleichsetzungsformel VIj=VIj+A repräsentiert sind, können die Position, die Größe, die Helligkeit oder andere Parameter wenigstens eines Partikels im Volumen betreffen. Das derart geänderte virtuelle Volumen wird als neues, aktuelles virtuelles Volumen VI einem nächsten Iterationsschritt unterworfen. Die Iteration wird solange fortgesetzt, bis eine hinreichende Übereinstimmung zwischen realen und virtuellen Bildern erreicht ist. Dies wird als Indiz dafür gewertet, dass das aktuelle, virtuelle Volumen VI mit hinreichender Genauigkeit mit dem realen Volumen VR übereinstimmt.

Dieses Verfahren wird für jeden Zeitpunkt t0, t1 durchgeführt, sodass die berechneten, virtuellen Volumina VI0 und VI1 zur Verfügung stehen, aus denen dann mit der Verknüpfung 18 das Verschiebungsvektorfeld berechnet wird.

Natürlich stellen die in der Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an Hand gegeben. Insbesondere kann die Anzahl und Anordnung der Detektoren beliebig variiert werden. Auch die spezielle Bestimmung der optischen Transferfunktion kann die Gegebenheiten des Einzelfalls angepasst werden.

### Bezugszeichenliste

| | |
|---|---|
| 10 | 3D-PTV-Verfahren |
| 12 | erster Detektor |
| 14 | zweiter Detektor |
| 16 | erfindungsgemäße Verknüpfung |
| 18 | Verknüpfung für Verschiebungsvektorfeld |
| 20 | Vergleichsschritt |
| 22 | Änderungsschritt |
| VR | reales Volumen |
| t0 | erster Zeitpunkt |
| t2 | zweiter Zeitpunkt |
| R1j | reales Bild von VR mittels 12 zum Zeitpunkt tj |
| R2j | reales Bild von VR zum Zeitpunkt tj |
| VIj | virtuelles Volumen, repräsentierend Zeitpunkt tj |
| VV | Verschiebungsvektorfeld |
| F1 | optische Transferfunktion von 12 |
| F2 | optische Transferfunktion von 14 |
| I1j | virtuelles Bild von VIj mittels F1 |
| I2j | virtuelles Bild von VIj mittels F2 |
| Δ | Änderung von VIj |

## Patentansprüche

1. Verfahren zur Bestimmung von Strömungsverhältnissen in einem Messvolumen (VR), das von einem mit optisch detektierbaren Partikeln beimpften Fluid durchströmt ist, umfassend die folgenden Schritte:
a) Simultanes Aufnehmen, zu einem ersten Aufnahmezeitpunkt (t0), einer ersten Mehrzahl zweidimensionaler, realer Bilder (R10, R20) einer dreidimensionalen, realen Verteilung der Partikel mittels derselben Mehrzahl von räumlich versetzt zueinander angeordneten Bilddetektoren (12, 14),
b) Wiederholen von Schritt a zu mindestens einem zweiten Aufnahmezeitpunkt (t1),
c) Für jeden Aufnahmezeitpunkt (t0, t1): Ermitteln einer dreidimensionalen, geschätzten Verteilung (VI0, VI1) der Partikel anhand der realen Bilder und
d) Berechnen eines dreidimensionalen Verschiebungsvektorfeldes (VV) durch Vergleich der geschätzten Verteilungen (VI0, VI1),
**gekennzeichnet durch**
den vor Schritt c durchzuführenden Schritt
e) Für jeden Bilddetektor (12; 14): Bestimmen einer optischen Transferfunktion (F1; F2), mit der die reale Verteilung (VR) **durch** den Bilddetektor (12; 14) abgebildet wird,
sowie weiter **dadurch** gekennzeichnet,
dass Schritt c mit einer grob geschätzten Anfangsverteilung (VIstart) als geschätzter Verteilung (VIj) startet und danach iterativ durchgeführt wird mit den folgenden Teilschritten:
c1) Berechnen zweidimensionaler, virtueller Bilder (I1j, I2j) der geschätzten Verteilung auf Basis der in Schritt e bestimmten Transferfunktionen (F1, F2),
c2) Vergleichsweises Ermitteln von Unterschieden zwischen den virtuellen Bildern (I1j; I2j) und den jeweils zugeordneten realen Bildern (R1j; R2j),
c3) Verändern der geschätzten Verteilung (VIj) in Abhängigkeit von den ermittelten Unterschieden,
wobei die Iteration bei Erreichen eines vorgegebenen Abbruchkriteriums beendet wird.

2. Verfahren nach Anspruch 1,
**dadurch gekennzeichnet,**
**dass** die Iteration beendet wird, wenn die ermittelten Unterschiede vorgegebene Toleranzwerte unterschreiten.

3. Verfahren nach einem der vorangehenden Ansprüche,
**dadurch gekennzeichnet,**
**dass** in Schritt c3 die geschätzte Verteilung (VIj) bezüglich der Anzahl der Partikel und/oder der Position, der Größe und/oder der Intensität wenigstens eines Partikels verändert wird.

4. Verfahren nach einem der vorangehenden Ansprüche,
**dadurch gekennzeichnet,**
**dass** in Schritt c2 zusätzlich Unterschiede zwischen virtuellen Bildern (I1j; I2j) unterschiedlicher Iterationsstufen bestimmt werden.

5. Verfahren nach einem der vorangehenden Ansprüche,
**dadurch gekennzeichnet,**
**dass** Schritt b zu mehr als einem zweiten Aufnahmezeitpunkt durchgeführt wird, wobei in Schritt c3 jede Veränderung der geschätzten Verteilung einer Plausibilitätsüberprüfung unter der Annahme unterworfen wird, dass kein nicht-randständiges Partikel aus dem Messvolumen verschwinden kann.

6. Verfahren nach einem der einem der vorangehenden Ansprüche,
**dadurch gekennzeichnet,**
**dass** in Schritt e die optischen Transferfunktionen (F1, F2) durch Aufnahme realer Bilder eines oder mehrerer bekannter Objekte im Messvolumen und Vergleich des oder der bekannten Objekte mit den aufgenommenen Bildern bestimmt werden.

7. Verfahren nach Anspruch 6,
**dadurch gekennzeichnet,**
**dass** das eine bekannte Objekt eine Kalibrierplatte oder ein Kalibriergitter ist.

## Claims

1. A method for determining flow conditions in a measuring volume (VR), which is permeated by a fluid spiked with optically detectable particles, comprising the following steps:
a) simultaneously recording at a first recording point in time (t0) of a first plurality of two-dimensional, real images (R10, R20) of a three-dimensional, real distribution of the particles by means of the same plurality of image detectors (12, 14) arranged spatially offset with respect to one another,
b) repeating Step a at least at one second recording point in time (t1),
c) determining for each recording point in time (t0, t1) a three-dimensional, estimated distribution (VI0, VI1) of the particles, based on the real images and
d) calculating a three-dimensional displacement vector field (VV) by comparing the estimated distributions (VI0, VI1),
**characterized in that** Step c must be preceded by the step of
e) determining for each image detector (12, 14) an optical transfer function (F1; F2) with which the real distribution (VR) is imaged by the image detector (12; 14),
and further **characterized in that** Step c starts with a roughly estimated initial distribution (VIstart) as an estimated distribution (VIj) and is thereafter carried out iteratively with the following sub-steps:
c1) calculating two-dimensional, virtual images (I1j, 12j) of the estimated distribution on the basis of the transfer functions (F1, F2) determined in Step e,
c2) comparatively determining differences between the virtual images (I1j; 12j) and the respectively assigned real images (R1j; R2j),
c3) changing the estimated distribution (VIj) depending on the determined differences, wherein the iteration is ended when a predetermined termination criterion has been reached.

2. The method according to Claim 1, **characterized in that** iteration is ended when the determined differences fall below predetermined tolerance values.

3. The method according to any of the preceding claims, **characterized in that** in Step c3 the estimated distribution (VIj) is changed regarding the number of particles and/or the position, the size and/or the intensity of at least one particle.

4. The method according to any of the preceding claims, **characterized in that** additionally in Step c2 differences between virtual images (I1j; I2j) of different iteration steps are determined.

5. The method according to any of the preceding claims, **characterized in that** Step b is carried out at more than one second recording point in time, where in Step c3 any change in the estimated distribution is subjected to a plausibility check under the assumption that no non-peripheral particle can escape from the measured volume.

6. The method according to any of the preceding claims, **characterized in that** in Step e the optical transfer functions (F1, F2) are determined by recording real images of one or more known objects in the measured volume and comparing the known object or objects with the recorded images.

7. The method according to Claim 6, **characterized in that** a known object is a calibration plate or a calibration grid.

## Revendications

1. Procédé de détermination des rapports de flux dans un volume de mesure (VR) constitué d'un fluide enrichi de particules optiquement détectables, comprenant les étapes suivantes :
a) enregistrement simultané à un premier point d'enregistrement dans le temps (t0) d'une première pluralité d'images bidimensionnelles, réelles (R10, R20) d'une distribution tridimensionnelle, réelle des particules, au moyen de la même pluralité de détecteurs d'images (12, 14) spatialement décalés les uns par rapport aux autres,
b) répétition de l'étape a au moins à un deuxième point d'enregistrement dans le temps (t1),
c) détermination, pour chaque point d'enregistrement dans le temps (t0, t1), d'une distribution tridimensionnelle, estimée (VI0, VI1) des particules, basée sur les images réelles et
d) calcul d'un champ de vecteurs déplacement tridimensionnel (VV) en comparant les distributions estimées (VI0, VI1),
**caractérisé en ce que** l'étape c doit être précédée de l'étape qui consiste dans la
e) détermination, pour chaque détecteur d'image (12; 14), d'une fonction de transfert optique (F1; F2) à travers laquelle la distribution réelle (VR) est représentée par le détecteur d'images (12; 14),
et caractérisé également **en ce que** l'étape c démarre avec une distribution initiale estimée de manière approximative (VIstart) en tant que distribution estimée (VIj) et qu'elle est ensuite appliquée de façon itérative avec les sous-étapes suivantes :
c1) calcul d'images bidimensionnelles, virtuelles (I1j, I2j) de la distribution estimée sur la base des fonctions de transfert (F1, F2) déterminées à l'étape e,
c2) détermination comparative des différences entre les images virtuelles (I1j; I2j) et les images réelles respectivement attribuées (R1j; R2j),
c3) changement de la distribution estimée (VIj) en fonction des différences déterminées, l'itération se terminant lorsqu'un critère de terminaison prédéterminé est atteint.

2. Procédé selon la revendication 1, **caractérisé en ce que** l'itération se termine lorsque les différences déterminées tombent au-dessous des valeurs de tolérance prédéterminées.

3. Procédé selon l'une quelconque des revendications précédentes, **caractérisé en ce que**, dans l'étape c3, la distribution estimée (Vlj) est changée pour ce qui est du nombre de particules et/ou de la position, de la taille et/ou de l'intensité d'au moins une particule.

4. Procédé selon l'une quelconque des revendications précédentes, caractérisé en plus en ce que, dans l'étape c2 sont déterminées les différences qu'il y a entre les images virtuelles (I1j; I2j) des différentes étapes d'itération.

5. Procédé selon l'une quelconque des revendications précédentes, **caractérisé en ce que** l'étape b est exécutée à plus d'un deuxième point d'enregistrement dans le temps, tout changement de la distribution estimée étant soumis, dans l'étape c3, à un contrôle de plausibilité selon l'hypothèse qu'aucune particule non-périphérique ne peut échapper du volume mesuré.

6. Procédé selon l'une quelconque des revendications précédentes, **caractérisé en ce que**, dans l'étape e, les fonctions de transfert optique (FI, F2) sont déterminées en enregistrant les images réelles d'un ou de plusieurs objets connus dans le volume mesuré et en comparant l'objet ou les objets connu (s) aux images enregistrées.

7. Procédé selon la revendication 6, **caractérisé en ce que** l'objet connu peut-être une plaque ou une grille de calibrage.
